# EUROPEAN PATENT SPECIFICATION

(11) **EP 4 437 829 B1**
(45) Date of publication and mention of the grant of the patent: **14.05.2025**
(21) Application number: 23219016.5
(22) Date of filing: 21.12.2023
(51) Int. Cl.: A01D 46/26

(54) **PORTABLE AGRICULTURAL TOOL**
TRAGBARES LANDWIRTSCHAFTLICHES WERKZEUG
OUTIL AGRICOLE PORTABLE

(30) Priority: 27.03.2023 IT 202300005727
(43) Date of publication of application: 02.10.2024
(73) Proprietor: Cifarelli S.p.A., 27058 Voghera (Pavia) (IT)
(72) Inventor: SPIANELLI, Fabio, 27058 VOGHERA (PAVIA) (IT)
(74) Representative: Tarabbia, Luigi

(56) References cited:
- EP-A1- 3 935 935
- EP-A2- 2 709 269
- WO-A2-2020/101591
- FR-A1- 2 909 517

## Description

The present invention falls within the agricultural sector and concerns a portable agricultural tool, such as a harvester.

Agricultural tools are known comprising a machine body equipped with a motor and a utensil configured to make the fruit fall, which is connected to the machine body motor by means of a mechanical transmission. In particular, agricultural tools of the harvester type are equipped with a utensil comprising a pair of combs that cause the fruit to fall by means of fast vibration (over 1000 beats per minute).

For example, an olive shaking machine used in olive harvesting is known from WO2020/101591. This machine is a so-called "olive harvester" and provides high torque at low speeds by transmitting the rotational movement received from the engine's drive gears to a plurality of timing gears, and to the curved connecting rods by means of the timing gears.

At operational level, each comb is moved according to a tilting movement. The pair of combs is typically moved at the same frequency. Together, the combs define a plurality of mutual movement configurations depending on the timing of the tilting movement of the combs themselves. In the field covered by the present invention, depending on parameters such as the size and type of fruit tree as well as the size and state of ripeness of the fruit to be harvested, it is known to employ a specific comb operating configuration. In particular, two mutual comb movement configurations are known to be very efficient: a first configuration in which the combs are moved in phase and a second configuration in which the combs are moved in counterphase.

A strongly felt need is therefore to be able to convert the mutual movement configuration of the combs (in particular by switching from the phase configuration to the counterphase configuration and vice versa) so that the harvester can be adapted to operate optimally according to these parameters. One attempt to solve this need has been to sell harvesters with the head tool (i.e. the pair of combs) interchangeable. In particular, the machine body of the harvester is known to be sold in combination with two or more head tools, each configured to operate at a predetermined configuration of mutual comb movement.

The Applicant has noted that, even in their most modern implementations, the systems described above have certain disadvantages.

Firstly, such systems have an operational disadvantage. In fact, the operator is forced to repeatedly change the head utensil in order to adapt the harvester to the plant variety on which he is operating so as to optimise the harvesting process. However, this practice is cumbersome and inefficient in terms of operational timing.

Secondly, such systems are disadvantageous in economic terms since, in addition to the cost of the machine body, the operator must also take into account the economic outlay associated with the two or more head utensils.

Furthermore, the continuous replacement of head utensils together with strong operating vibrations can result in damage to the mutual coupling means of the head utensil of the machine body.

In this context, the technical task of the present invention is therefore to make available a portable agricultural tool, such as a harvester, that is free of the drawbacks complained of in the known technique.

The purpose of the present invention is therefore to make available a portable agricultural tool, such as a harvester, that is versatile and at the same time inexpensive and easy to use.

A further purpose of the present invention is to make available a portable agricultural tool, such as a harvester, with a simplified structure that is more resistant to damage.

The purposes are substantially achieved by a portable agricultural tool, such as a harvester, in accordance with the characteristics set forth respectively in the accompanying claim 1. Preferred aspects are defined by the accompanying dependent claims.

Further features and advantages of the present invention will become more apparent from the approximate and thus non-limiting description of a preferred, but non-exclusive, embodiment of a portable agricultural tool, as illustrated in the accompanying drawings, wherein:
- figures 1A-1C show respective schematic and exploded views of a first, illustrative and non-limiting embodiment of a portable agricultural tool in accordance with the present invention;
- figures 2A-2C show respective schematic and exploded views of a second, illustrative and non-limiting embodiment of a portable agricultural tool in accordance with the present invention;
- figures 3A-3C show respective schematic and exploded views of a third, illustrative and non-limiting embodiment of a portable agricultural tool in accordance with the present invention;
- figures 4A-4C show respective schematic and exploded views of a fourth, illustrative and non-limiting embodiment of a portable agricultural tool in accordance with the present invention.

With reference to the accompanying figures, the numerical reference "1" indicates a portable agricultural tool. Preferably, the tool 1 is of the "harvester" type. However, the present invention is extended to any portable agricultural tool presenting a utensil comprising two elements that are mutually movable according to a periodic movement, in accordance with the generality of the invention.

The tool 1 comprises a machine body, not illustrated, comprising a motor 3 configured to selectively operate in a first drive direction and a second drive direction opposite the first drive direction. In other words, functionally, the operator can selectively drive the motor 3 in the first drive direction or in the second drive direction. Preferably, the tool 1 comprises an operator-driven control connected to the motor 3 and configured to switch the tool 1 on and off and to switch the drive direction of the motor 3.

The machine body has a rod that extends longitudinally along a longitudinal axis "Z".

The tool 1 comprises a utensil 4 operatively arranged on one end of the rod. The tool 4 is connected to the motor 3 by means of a mechanical transmission 2. The tool 4 comprises a first comb 10 and a second comb 20 connected to the motor 3 by means of the aforementioned mechanical transmission 2.

Preferably, the combs 10, 20 have a mutually specular conformation with respect to the longitudinal axis "Z" of the tool 1.

The mechanical transmission 2 comprises a first connecting rod-crank mechanism 100 configured to move the first comb 10 and a second connecting rod-crank mechanism 200 configured to move the second comb 20.

Structurally, each connecting rod-crank mechanism 100, 200 comprises a main body 101, 201 fitted to rotate about a respective axis of rotation "X", "Y". In use, the main bodies 101, 201 are mutually concordant in rotation. Each connecting rod-crank mechanism 100, 200 further comprises a connecting rod 102, 202 having a first end 102a, 202a hinged to the respective comb 10, 20 and a second end 102b, 202b hinged to the main body 101, 201. In particular, the second end 102b, 202b of the connecting rod 102, 202 is hinged to the main body 101, 201 in a respective crank pin 103, 203.

Preferably, as can be seen in the accompanying figures, each main body 101, 201 is at least partially circular in shape. Even more preferably, each main body 101, 201 has a gear wheel shape.

Preferably, moreover, the main bodies 101, 201 of the two connecting rod-crank mechanisms 100, 200 have the same diameter and the two connecting rods 102, 202 of the two connecting rod-crank mechanisms 100, 200 have the same length.

Advantageously, these technical features allow the two connecting rod-crank mechanisms 100, 200 to operate at the same frequency.

In accordance with a peculiar aspect of the present invention, the main body 101, 201 of the first and/or second connecting rod-crank mechanism 100, 200 defines a sliding path 104, 204 for the respective crank pin 103, 203. In particular, the sliding path 104, 204 is delimited by a first end stop 105, 205 and a second end stop 106, 206. In addition, the sliding path 104, 204 extends around the respective axis of rotation "X", "Y". Preferably, the sliding path 104, 204 extends in an arc-of-a-circle about the respective axis of rotation "X", "Y".

At functional level, when the motor 3 operates according to the first drive direction, the crank pin 103, 203 abuts against the first end stop 105, 205 so that the two combs 10, 20 mutually take on a first tilting configuration whereas when the motor 3 operates according to the second drive direction, the crank pin 103, 203 abuts against the second end stop 106, 206 so that the two combs 10, 20 mutually take on a second tilting configuration, which is offset from the first tilting configuration.

Advantageously, this system allows the mutual tilting configuration to be switched between the two combs 10, 20. In fact, by means of this system, the tool 1 can selectively operate in the first drive direction of the motor 3 in which the combs 10, 20 assume a mutual tilting configuration and in the second drive direction in which the combs 10, 20 assume a further mutual tilting configuration, different from the previous one.

Such a result, as will be further clarified in the following of the present description, can be obtained by means of a pair of connecting rod-crank mechanisms 100, 200 in which only one of them defines a respective sliding path 104 for the crank pin 103 or by means of a pair of connecting rod-crank mechanisms 100, 200 wherein both of them define respective sliding paths 104, 204 for the two crank pins 103, 203, wherein the sliding paths 104, 204 have a different angular extension with respect to the axis of rotation "X", "Y" of the respective main body 101, 201.

Preferably, in the first tilting configuration the two combs 10, 20 are moved by the respective connecting rod-crank mechanisms 100, 200 so that they are mutually in phase. Preferably, in other words, in the first tilting configuration the two combs 10, 20 move concordantly.

In accordance with an alternative embodiment, in the first tilting configuration the two combs 10, 20 are driven by the respective connecting rod-crank mechanisms 100, 200 so that they are mutually in counterphase. Preferably, in other words, in the first tilting configuration the two combs 10, 20 move in opposite directions.

In the following of the present description, reference will be made to the embodiment in which the two combs 10, 20 are moved by the respective connecting rod-crank mechanisms 100, 200 so that they are mutually in phase. However, all of the above concepts will also be applicable to the embodiment in which the two combs 10, 20 are moved by the respective connecting rod-crank mechanisms 100, 200 in such a way that they are mutually in counterphase without departing from the inventive concept of the present invention.

In the second tilting configuration, the two combs 10, 20 are instead moved by the respective connecting rod-crank mechanisms 100, 200 so that they are mutually offset by a predetermined phase delay. Preferably, in the second tilting configuration, the two combs 10, 20 are moved by the respective connecting rod-crank mechanisms 100, 200 so that they are in counterphase.

With regard to the structure of the mechanical transmission 2, four embodiments are described, which are illustrative and therefore not limiting, in accordance with the generality of the invention.

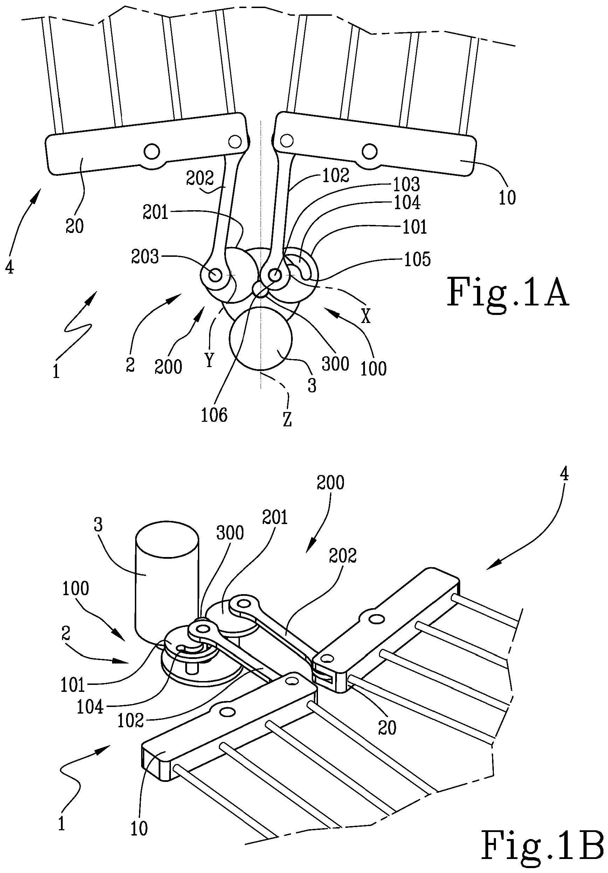

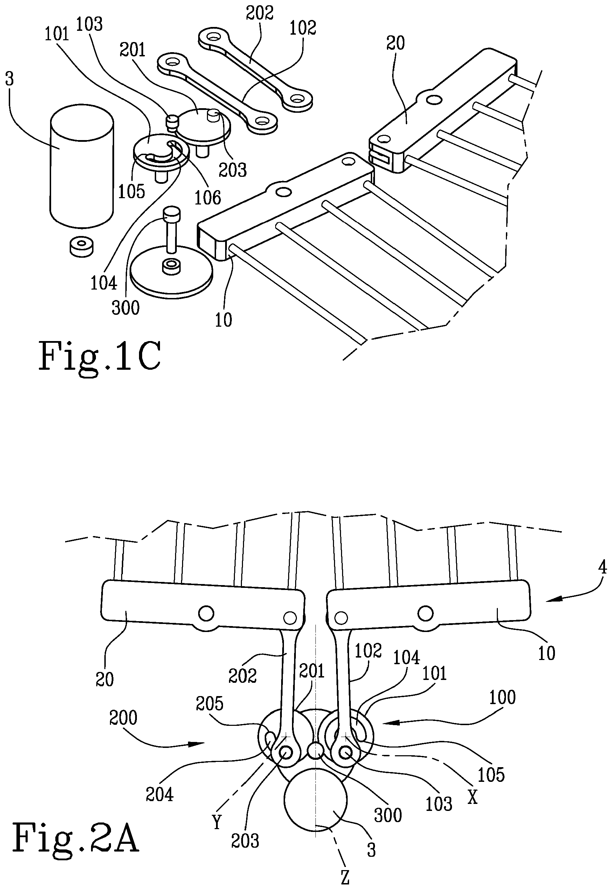

Figures 1A-1C show a first possible embodiment of the mechanical transmission 2.

In such an embodiment, the main bodies 101, 201 of the two connecting rod-crank mechanisms 100, 200 are coplanar and placed side-by-side along a longitudinal axis "Z" of the tool 1. In particular, the axes of rotation "X", "Y" of the two main bodies 101, 201 are parallel.

The mechanical transmission 2 comprises a pinion 300 operatively connected to and active on both main bodies 101, 201 of the two connecting rod-crank mechanisms 100, 200. In particular, the pinion 300 is operatively arranged substantially along the longitudinal axis "Z" of the tool 1 and is operatively arranged in a position interposed between the two main bodies 101, 201.

In this embodiment, only one of the connecting rod-crank mechanisms 100, 200 defines the sliding path 104, 204 for the respective crank pin 103, 203.

Preferably, the first connecting rod-crank mechanism 100 defines the respective sliding path 104.

The sliding path 104 extends angularly for an angle comprised between 10° and 210° about the respective axis of rotation "X". Preferably, the sliding path 104 extends angularly for 180° about the respective axis of rotation "X" so that in the second tilting configuration the two combs 10, 20 are mutually moved in counterphase.

Structurally, the sliding path 104 is defined by a groove or slot 110 obtained on the respective main body 101, to which the second end 102b, of the respective connecting rod 102 is slidably coupled.

Functionally, when the motor 3 reverses its drive direction, from the first drive direction to the second drive direction, the main bodies 101, 201 of the two connecting rod-crank mechanisms 100, 200 begin to rotate in the corresponding drive direction. However, in the first connecting rod-crank mechanism 100, the connecting rod 102, slidably constrained in the respective sliding path 104, slides along the sliding path 104 from the first end-stop 105 to the second end-stop 106 in a manner not integral with the respective main body 101 so as to remain substantially stationary with respect to the axis of rotation "X" of the main body 101 and so as not to move the respective comb 10, which accumulates a phase delay with respect to the comb 20 connected to the second connecting rod-crank mechanism 200. When the connecting rod 102 finally abuts against the second end stop 106 the connecting rod 102 resumes movement integrally with the respective main body 101 about the aforementioned axis of rotation "X", putting the respective comb 10 back in motion. By reversing the drive direction of the motor 3 again, in particular from the second drive direction to the first drive direction, the connecting rod returns to abut against the first end stop 105 of the respective sliding path 104, so that the two combs are again mutually moved in phase.

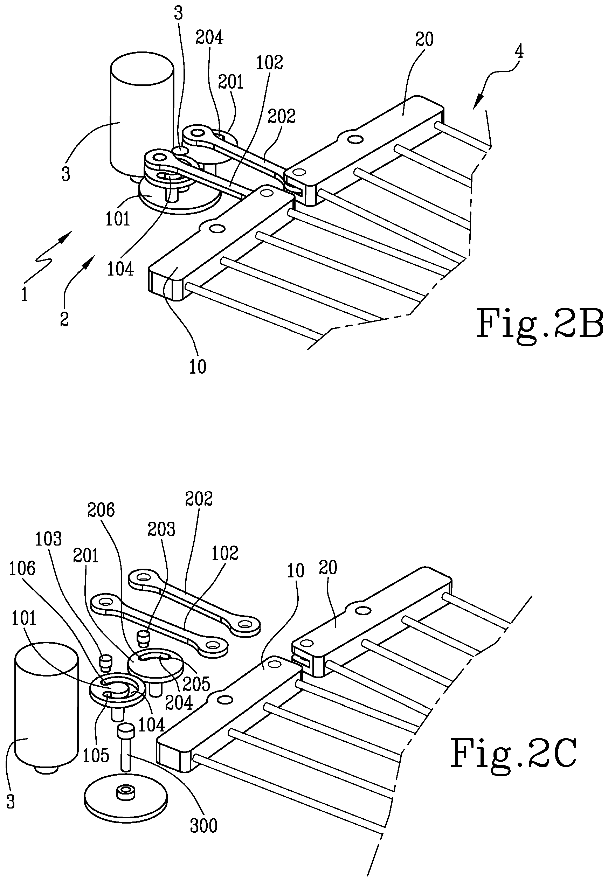

Figures 2A-2C show a second possible embodiment of the mechanical transmission 2.

In such an embodiment, the main bodies 101, 201 of the two connecting rod-crank mechanisms 100, 200 are coplanar and placed side-by-side along a longitudinal axis "Z" of the tool 1. In particular, the axes of rotation "X", "Y" of the two main bodies 101, 201 are parallel.

The mechanical transmission 2 comprises a pinion 300 operatively connected to and active on both main bodies 101, 201 of the two connecting rod-crank mechanisms 100, 200. In particular, the pinion 300 is operatively arranged substantially along the longitudinal axis "Z" of the tool 1 and is operatively arranged in a position interposed between the two main bodies 101, 201.

In such an embodiment, both connecting rod-crank mechanisms 100, 200 define their own sliding path 104, 204 for the respective crank pins 103, 203. In particular, the first connecting rod-crank mechanism 100 defines a first sliding path 104 for the respective crank pin 103 while the second connecting rod-crank mechanism 200 defines a second sliding path 204 for the respective crank pin 203: the first and second sliding paths 104, 204 extend angularly about the respective axes of rotation "X", "Y" having an angular extension difference comprised between 10° and 210°. Preferably, the two sliding paths 104, 204 have a difference in angular extension of 180° so that in the second tilting configuration, the two combs 10, 20 are mutually moved in counterphase.

Figure 1A shows the second tilting configuration. Specifically, in the second drive direction of the motor 3, the main bodies 101, 201 rotate clockwise, while in the first drive direction of the motor 3, the main bodies 101, 201 rotate anticlockwise.

As can be seen in Figures 2A-2C, the sliding path 104 of the first connecting rod-crank mechanism 100 extends at an angle of 270° about the respective axis of rotation "X", while the sliding path 204 of the second connecting rod-crank mechanism 200 extends at an angle of 90° about the respective axis of rotation "Y".

Structurally, each sliding path 104, 204 is defined by a groove or slot 110, 210 obtained on the respective main body 101, 201, to which the second end 102b, 202b of the respective connecting rod 102, 202 is slidably coupled.

Functionally, when the motor 3 reverses its drive direction, from the first drive direction to the second drive direction, the main bodies 101, 201 of the two connecting rod-crank mechanisms 100, 200 begin to rotate in the corresponding drive direction. However, both connecting rods 102, 202, which are slidably constrained in the respective sliding path 104, 204, slide along the sliding path 104, 204 from the first end-stop 105, 205 to the second end-stop 106, 206 in a manner not integral with the respective main body 101, 201 so as to remain substantially stationary with respect to the axis of rotation "X" of the main body 101, 201 and so as not to move the respective comb 10, 20. Since the sliding path 204 of the second connecting rod-crank mechanism 200 has a smaller angular extension than the sliding path 104 of the first connecting rod-crank mechanism, the connecting rod 202 of the second connecting rod-crank mechanism 200 comes into contact with the respective second end-stop 206 before the connecting rod 102 of the first connecting rod-crank mechanism 100. This results in the connecting rod 202 of the second connecting rod-crank mechanism 200 starting to rotate integrally with the respective main body 201 (and thus moving the respective comb 20) before the connecting rod 102 of the first connecting rod-crank mechanism. Therefore, as for the embodiment in Figures 1A-1C, the comb 10 will accumulate a phase delay with respect to the comb 20.

By reversing the drive direction of the motor 3 again, in particular from the second drive direction to the first drive direction, the connecting rod returns to abut against the first end stop 105 of the respective sliding path 104, so that the two combs are again mutually moved in phase.

Figure 2A shows the second tilting configuration. Specifically, in the second drive direction of the motor 3, the main bodies 101, 201 rotate clockwise, while in the first drive direction of the motor 3, the main bodies 101, 201 rotate anticlockwise.

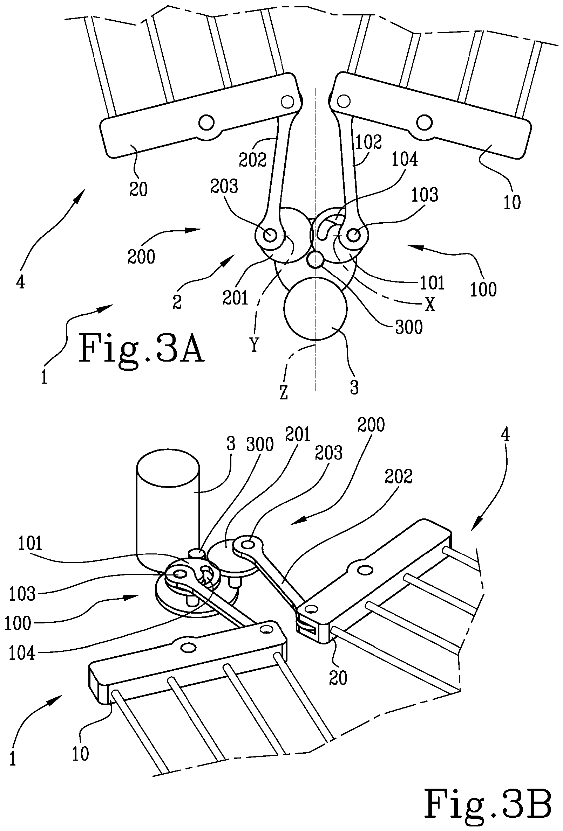

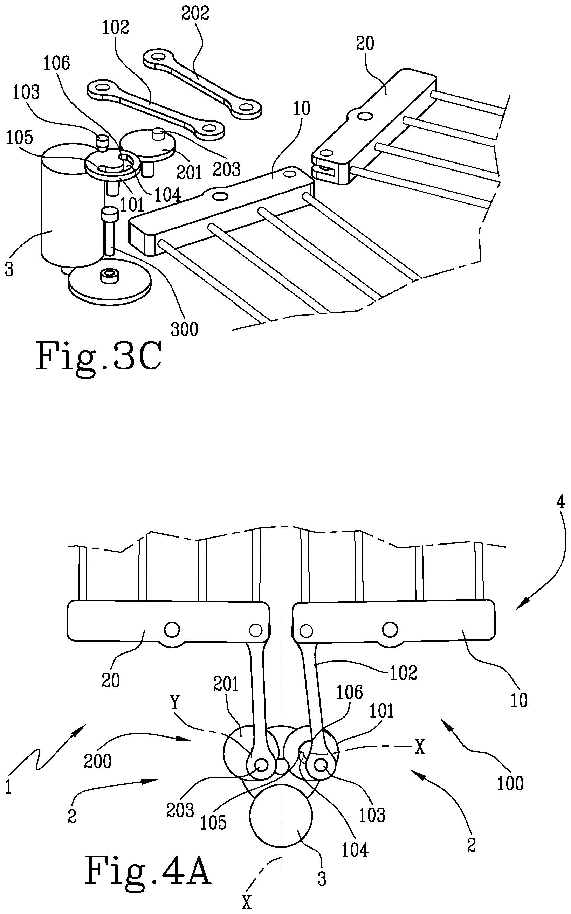

Figures 3A-3C show a third possible embodiment of the mechanical transmission 2.

In such an embodiment, the main bodies 101, 201 of the two connecting rod-crank mechanisms 100, 200 are coplanar and placed side-by-side along a longitudinal axis "Z" of the tool 1. In particular, the axes of rotation "X", "Y" of the two main bodies 101, 201 are parallel.

The mechanical transmission 2 comprises a pinion 300 operatively connected to only one of the main bodies 101, 201 of the two connecting rod-crank mechanisms 100, 200 while the other main body 201, 101 is connected in a cascaded system. As can be seen in Figures 3A-3C, the pinion 300 directly moves the main body 101 of the first connecting rod-crank mechanism 100 while the main body 201 of the second connecting rod-crank mechanism 200 is operatively connected to the main body 101 of the first connecting rod-crank mechanism 100 so as to be moved by it. In this embodiment, only one of the connecting rod-crank mechanisms 100, 200 defines the sliding path 104, 204 for the respective crank pin 103, 203, as in the embodiment of Figures 1A-1C.

Preferably, the first connecting rod-crank mechanism 100 defines the respective sliding path 104.

The sliding path 104 extends angularly for an angle comprised between 10° and 210° about the respective axis of rotation "X". Preferably, the sliding path 104 extends angularly for 180° about the respective axis of rotation "X" so that in the second tilting configuration the two combs 10, 20 are mutually moved in counterphase.

At functional level, this embodiment operates essentially like the embodiment of Figures 1A-1C.

Figure 3A shows the second tilting configuration. Specifically, in the second drive direction of the motor 3, the main bodies 101, 201 rotate clockwise, while in the first drive direction of the motor 3, the main bodies 101, 201 rotate anticlockwise.

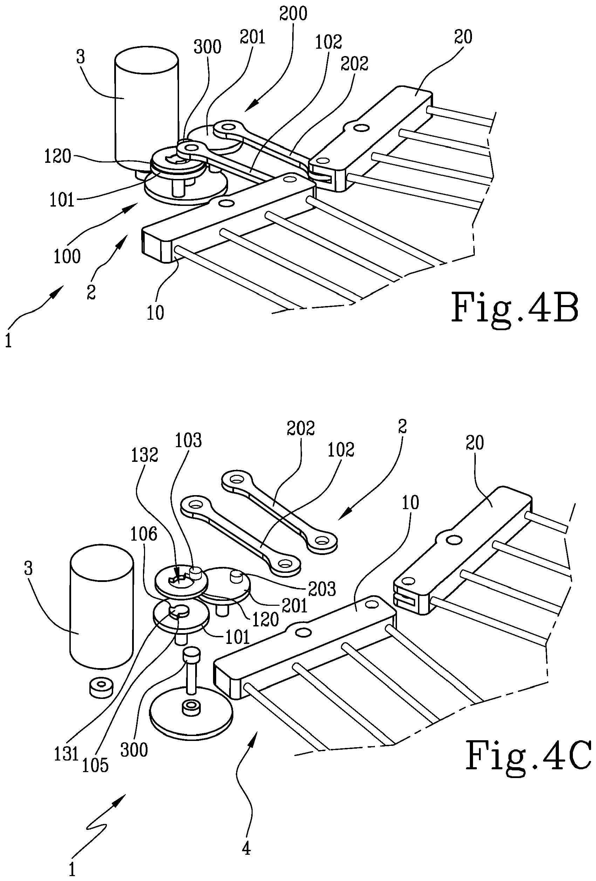

Figures 4A-4C show a fourth possible embodiment of the mechanical transmission 2.

In such an embodiment, the main bodies 101, 201 of the two connecting rod-crank mechanisms 100, 200 are coplanar and placed side-by-side along a longitudinal axis "Z" of the tool 1. In particular, the axes of rotation "X", "Y" of the two main bodies 101, 201 are parallel.

The mechanical transmission 2 comprises a pinion 300 operatively connected to and active on both main bodies 101, 201 of the two connecting rod-crank mechanisms 100, 200. In particular, the pinion 300 is operatively arranged substantially along the longitudinal axis "Z" of the tool 1 and is operatively arranged in a position interposed between the two main bodies 101, 201.

In this embodiment, only one of the connecting rod-crank mechanisms 100, 200 defines the sliding path 104, 204 for the respective crank pin 103, 203.

Preferably, the first connecting rod-crank mechanism 100 defines the respective sliding path 104.

The sliding path 104 extends angularly for an angle comprised between 10° and 210° about the respective axis of rotation "X". Preferably, the sliding path 104 extends angularly for 180° about the respective axis of rotation "X" so that in the second tilting configuration the two combs 10, 20 are mutually moved in counterphase.

Structurally, the first connecting rod-crank mechanism 100 comprises an intermediate body 120 hinged to the respective main body 101 so as to be rotatable about the respective axis of rotation "X"; the second end 102b of the respective connecting rod 102 is integrally hinged to the intermediate body 120 in a radially peripheral portion thereof.

The main body 101 and the respective intermediate body 120 have mutual blocking elements 131, 132, such as protuberances and/or recesses, defining the first end-stop 104a and the second end-stop 104b so that the intermediate body 120 is rotatable relative to the respective main body 101 between two positions defining respectively the two tilting configurations 10, 20.

In other words, the sliding path 104 is essentially defined by the mutual movement of the intermediate body 120 with respect to the main body 101 on which it is constrained and pivots between the aforementioned two positions, defined in turn by the blocking elements 131, 132.

Preferably, the intermediate body 120 has a recess or slot 132 while the main body 101 has a protuberance 131 operatively inserted into the recess or slot 132 of the intermediate body 120.

The protuberance 131 of the main body 101 defines the aforementioned first end stop 105 and second end stop 106.

On a functional level, this embodiment operates essentially similarly to the embodiment in Figures 1A-1C.

Figure 4A shows the second tilting configuration. Specifically, in the second drive direction of the motor 3, the main bodies 101, 201 rotate clockwise, while in the first drive direction of the motor 3, the main bodies 101, 201 rotate anticlockwise.

According to a embodiment of the mechanical transmission 2 not shown, the main bodies 101, 201 of the two connecting rod-crank mechanisms 100, 200 are integral or permanently connected so as to be integral and are rotatable about the same axis of rotation "X", "Y"; the main bodies 101, 201 define a double discoidal body to which the connecting rods 102, 202 are rotatably connected on opposite sides of the double discoidal body itself.

In this embodiment, the sliding paths can be realised in accordance with the embodiments described above. In other words, only one of the connecting rod-crank mechanisms 100, 200 can be provided to describe the respective sliding path 104, 204 in accordance with the above. Alternatively, it can be provided that both connecting rod-crank mechanisms 100, 200 describe the respective sliding paths 104, 204 in accordance with the above.

The present invention achieves the intended purposes by eliminating the drawbacks highlighted by the prior art: in this regard, it should first be noted that the tool 1 as described and/or claimed allows for selectively varying the mutual movement configuration of the combs by reversing the direction of the motor drive, thus making the tool 1 itself extremely versatile and, at the same time, easy to use. It should also be noted that by eliminating the need to have multiple utensils available, each configured for a specific operating configuration, the tool is also inexpensive and more resistant to damage. Finally, the tool in accordance with what is described and/or claimed has a mechanical transmission such that it is versatile and structurally simplified.

## Claims

1. A portable agricultural tool (1), such as a harvester, comprising:
- a machine body comprising a motor (3);
- a first comb (10) and a second comb (20) connected to the motor (3) by means of a mechanical transmission (2), which comprises a first connecting rod-crank mechanism (100) configured to move the first comb (10) and a second connecting rod-crank mechanism (200) configured to move the second comb (20); each connecting rod-crank mechanism (100, 200) comprising a main body (101, 201) fitted to rotate about a respective axis of rotation (X, Y) and a connecting rod (102, 202) having a first end (102a, 202a) hinged to the respective comb (10, 20) and a second end (102b, 202b) hinged to a respective main body (101, 201) in a respective crank pin (103, 203); in use, said main bodies (101, 201) being mutually concordant in rotation;
**characterised in that** the motor (3) is configured to selectively operate in a first drive direction and a second drive direction opposite the first drive direction, and that
the main body (101, 201) of the first and/or second connecting rod-crank mechanism (100, 200) defines a sliding path (104, 204) for the respective crank pin (103, 203), the sliding path (103, 203) being delimited by a first end stop (104a, 204a) and a second end stop (104b, 204b) and extending about the respective axis of rotation (X, Y) so that:
when the motor (3) operates according to the first drive direction, the crank pin (103, 203) abuts against the first end stop (104a, 204a) so that the two combs (10, 20) mutually take on a first tilting configuration; and
when the motor (3) operates according to the second drive direction, the crank pin (103, 203) abuts against the second end stop (104b, 204b) so that the two combs (10, 20) mutually take on a second tilting configuration, which is offset from the first tilting configuration.

2. The tool (1) according to claim 1, wherein in said first tilting configuration, the two combs (10, 20) are moved by the respective connecting rod-crank mechanisms (100, 200) so as to be mutually in phase.

3. The tool (1) according to claim 1 or 2, wherein each main body (101, 201) has a gear wheel shape and wherein the sliding path (104, 204) extends in an arc-of-a-circle about the respective axis of rotation (X, Y); preferably the main bodies (101, 201) of the two connecting rod-crank mechanisms (100, 200) having equal diameter and said two connecting rods (102, 202) of the two connecting rod-crank mechanisms (100, 200) having equal length.

4. The tool (1) according to any one of the preceding claims, wherein only one of the connecting rod-crank mechanisms (100, 200) defines the sliding path (104, 204) for the respective crank pin (103, 203) and wherein the sliding path (104, 204) extends angularly for an angle of between 10° and 210° about the respective axis of rotation (X, Y), preferably, the sliding path (104, 204) extending angularly for 180° about the respective axis of rotation (X, Y) so that in the second tilting configuration the two combs (10, 20) are mutually moved in counterphase.

5. The tool (1) according to any one of the preceding claims 1 to 3, wherein the first connecting rod-crank mechanism (100) defines a first sliding path (104) for the respective crank pin (103) and wherein the second connecting rod-crank mechanism (200) defines a second sliding path (204) for the respective crank pin (203);
said first and second sliding paths (104, 204) extending angularly about their respective axes of rotation (X, Y) and having a difference in the angular extension of between 10° and 210°, preferably, the two sliding paths (104, 204) having a difference in the angular extension of 180° so that in the second tilting configuration the two combs (10, 20) are mutually moved in counterphase.

6. The tool (1) according to any one of the preceding claims, wherein the sliding path (104, 204) is defined by a groove or slot (110, 210) obtained on the respective main body (101, 201), to which the second end (102b, 202b) of the respective connecting rod (102, 202) is slidably coupled.

7. The tool (1) according to any one of the preceding claims 1 to 5, wherein the first and/or second connecting rod-crank mechanism (100, 200) comprises an intermediate body (120) hinged to the respective main body (101) so as to be rotatable about the respective axis of rotation (X); the second end (102b) of the respective connecting rod (102) being integrally hinged to said intermediate body (120) in a radially peripheral portion thereof;
the main body (101) and the respective intermediate body (120) having mutual blocking elements (131, 132), such as protuberances and/or recesses, defining said first end-stop (104a) and said second end-stop (104b) so that the intermediate body (120) is rotatable relative to the respective main body (101) between two positions defining respectively the two tilting configurations (10, 20).

8. The tool (1) according to any one of the preceding claims, wherein the main bodies (101, 201) of the two connecting rod-crank mechanisms (100, 200) are coplanar and placed side-by-side along a longitudinal axis (Z) of the tool (1); the axes of rotation (X, Y) of the two main bodies (101, 201) being parallel.

9. The tool (1) according to any one of the preceding claims 1 to 7, wherein the main bodies (101, 201) of the two connecting rod-crank mechanisms (100, 200) are integral or permanently connected so as to be integral and are rotatable about the same axis of rotation (X, Y); said main bodies (101, 201) defining a double discoidal body to which said connecting rods (102, 202) are rotatably connected on opposite sides of the double discoidal body.

10. The tool (1) according to any one of the preceding claims, wherein said mechanical transmission (2) comprises a pinion (300) operatively connected to and active on both main bodies (101, 201) of the two connecting rod-crank mechanisms (100, 200).

11. The tool (1) according to any one of the preceding claims 1 to 9, wherein said mechanical transmission (20) comprises a pinion (300) operatively connected to only one of the main bodies (101, 201) of the two connecting rod-crank mechanisms (100, 200) while the other main body (201, 101) is connected in a cascaded system.

12. The tool (1) according to claim 1, wherein in said first tilting configuration, the two combs (10, 20) are moved by the respective connecting rod-crank mechanisms (100, 200) so as to be mutually arranged in counterphase.

## Patentansprüche

1. Tragbares landwirtschaftliches Werkzeug (1), wie z.B. eine Mähmaschine, umfassend:
- einen Maschinenkörper umfassend einen Motor (3);
- einen ersten Kamm (10) und einen zweiten Kamm (20), die mit dem Motor (3) über ein mechanisches Getriebe (2) verbunden sind, das einen ersten Verbindungsstange-Kurbel-Mechanismus (100), der dazu konfiguriert ist, den ersten Kamm (10) zu bewegen, und einen zweiten Verbindungsstange-Kurbel-Mechanismus (200), der dazu konfiguriert ist, den zweiten Kamm (20) zu bewegen, umfasst; jeder Verbindungsstange-Kurbel-Mechanismus (100, 200) umfassend einen Hauptkörper (101, 201), der um eine jeweilige Drehachse (X, Y) drehbar ist, und eine Verbindungsstange (102, 202) aufweisend ein erstes Ende (102a, 202a), das an dem jeweiligen Kamm (10, 20) angelenkt wird, und ein zweites Ende (102b, 202b), das an einem jeweiligen Hauptkörper (101, 201) in einem jeweiligen Kurbelzapfen (103, 203) angelenkt wird; wobei die Hauptkörper (101, 201) im Gebrauch bei der Drehung zueinander übereinstimmen;
**dadurch gekennzeichnet, dass** der Motor (3) dazu konfiguriert ist, selektiv in einer ersten Antriebsrichtung und einer zweiten Antriebsrichtung, die entgegengesetzt zu der ersten Antriebsrichtung ist, zu arbeiten, und dass
der Hauptkörper (101, 201) des ersten und/oder des zweiten Verbindungsstange-Kurbel-Mechanismus (100, 200) eine Gleitbahn (104, 204) für den jeweiligen Kurbelzapfen (103, 203) definiert, wobei die Gleitbahn (103, 203) durch einen ersten Endanschlag (104a, 204a) und einen zweiten Endanschlag (104b, 204b) begrenzt wird und sich um die jeweilige Drehachse (X, Y) erstreckt, so dass:
wenn der Motor (3) nach der ersten Antriebsrichtung arbeitet, liegt der Kurbelzapfen (103, 203) auf den ersten Endanschlag (104a, 204a) auf, so dass die zwei Kämme (10, 20) gegenseitig eine erste Kippkonfiguration einnehmen; und
wenn der Motor (3) in der zweiten Antriebsrichtung arbeitet, liegt der Kurbelzapfen (103, 203) auf den zweiten Endanschlag (104b, 204b) auf, so dass die zwei Kämme (10, 20) gegenseitig eine zweite Kippstellung einnehmen, die gegenüber der ersten Kippstellung versetzt ist.

2. Werkzeug (1) nach Anspruch 1, wobei die zwei Kämme (10, 20) in der ersten Kippkonfiguration durch die jeweiligen Verbindungsstange-Kurbel-Mechanismen (100, 200) bewegt werden, sodass sie zueinander in Phase sind.

3. Werkzeug (1) nach Anspruch 1 oder 2, wobei jeder Hauptkörper (101, 201) eine Zahnrad-Gestalt aufweist und wobei sich die Gleitbahn (104, 204) in einem Kreisbogen um die jeweilige Drehachse (X, Y) erstreckt; wobei die Hauptkörper (101, 201) der beiden Verbindungsstange-Kurbel-Mechanismen (100, 200) vorzugsweise den gleichen Durchmesser aufweisen und die zwei Verbindungsstange (102, 202) der zwei Verbindungsstange-Kurbel-Mechanismen (100, 200) die gleiche Länge aufweisen.

4. Werkzeug (1) nach einem der vorhergehenden Ansprüche, wobei nur einer der Verbindungsstange-Kurbel-Mechanismen (100, 200) die Gleitbahn (104, 204) für den jeweiligen Kurbelzapfen (103, 203) definiert und wobei sich die Gleitbahn (104, 204) in einem Winkel zwischen 10° und 210° um die jeweilige Drehachse (X, Y) erstreckt, wobei sich die Gleitbahn(104, 204) vorzugsweise in einem Winkel von 180° um die jeweilige Drehachse (X, Y) erstreckt, so dass die zwei Kämme (10, 20) in der zweiten Kippkonfiguration gegenseitig zueinander bewegt werden.

5. Werkzeug (1) nach einem der vorhergehenden Ansprüche 1 bis 3, wobei der erste Verbindungsstange-Kurbel-Mechanismus (100) eine erste Gleitbahn (104) für den jeweiligen Kurbelzapfen (103) definiert und wobei der zweite Verbindungsstange-Kurbel-Mechanismus (200) eine zweite Gleitbahn (204) für den jeweiligen Kurbelzapfen (203) definiert;
wobei die erste und die zweite Gleitbahnen (104, 204) sich winklig um ihre jeweiligen Drehachsen (X, Y) erstrecken und eine Differenz in der Winkelausdehnung zwischen 10° und 210° aufweisen, wobei vorzugsweise die beiden Gleitbahnen (104, 204) eine Differenz in der Winkelausdehnung von 180° aufweisen, so dass die zwei Kämme (10, 20) in der zweiten Kippkonfiguration gegenseitig zueinander bewegt werden.

6. Werkzeug (1) nach einem der vorhergehenden Ansprüche, wobei die Gleitbahn (104, 204) durch eine Nut oder einen Schlitz (110, 210) definiert wird, die bzw. der an dem jeweiligen Hauptkörper (101, 201) ausgebildet werden und mit der bzw. dem das zweite Ende (102b, 202b) der jeweiligen Verbindungsstange (102, 202) gleitend gekoppelt wird.

7. Werkzeug (1) nach einem der vorhergehenden Ansprüche 1 bis 5, wobei der erste und/oder zweite Verbindungsstange-Kurbel-Mechanismus (100, 200) einen Zwischenkörper (120) umfasst, der an dem jeweiligen Hauptkörper (101) angelenkt wird, sodass er um die jeweilige Drehachse (X) drehbar ist; wobei das zweite Ende (102b) der jeweiligen Verbindungsstange (102) einstückig an dem Zwischenkörper (120) in einem radialen Umfangsabschnitt davon angelenkt wird;
wobei der Hauptkörper (101) und der jeweilige Zwischenkörper (120) gegenseitige Blockierelemente (131, 132), wie Vorsprünge und/oder Ausnehmungen, aufweisen, die den ersten Endanschlag (104a) und den zweiten Endanschlag (104b) definieren, so dass der Zwischenkörper (120) in Bezug auf den jeweiligen Hauptkörper (101) zwischen zwei Positionen drehbar ist, die jeweils die zwei Kippkonfigurationen (10, 20) definieren.

8. Werkzeug (1) nach einem der vorhergehenden Ansprüche, wobei die Hauptkörper (101, 201) der zwei Verbindungstange-Kurbel-Mechanismen (100, 200) koplanar sind und nebeneinander entlang einer Längsachse (Z) des Werkzeugs (1) angeordnet sind; wobei die Drehachsen (X, Y) der beiden Hauptkörper (101, 201) parallel sind.

9. Werkzeug (1) nach einem der vorhergehenden Ansprüche 1 bis 7, wobei die Hauptkörper (101, 201) der zwei Verbindungsstange-Kurbel-Mechanismen (100, 200) einstückig ausgebildet sind oder dauerhaft verbunden sind, so dass sie einstückig ausgebildet sind, und um dieselbe Drehachse (X, Y) drehbar sind; wobei die Hauptkörper (101, 201) einen doppelscheibenförmigen Körper definieren, mit dem die Verbindungsstangen (102, 202) auf gegenüberliegenden Seiten des doppelscheibenförmigen Körpers drehbar verbunden sind.

10. Werkzeug (1) nach einem der vorhergehenden Ansprüche, wobei das mechanische Getriebe (2) ein Ritzel (300) umfasst, das operativ mit beiden Hauptkörpern (101, 201) der zwei Verbindungsstange-Kurbel-Mechanismen (100, 200) verbunden ist und auf diese einwirkt.

11. Werkzeug (1) nach einem der vorhergehenden Ansprüche 1 bis 9, wobei das mechanische Getriebe (20) ein Ritzel (300) umfasst, das operativ nur mit einem der Hauptkörper (101, 201) der zwei Verbindungsstange-Kurbel-Mechanismen (100, 200) verbunden ist, während der andere Hauptkörper (201, 101) in einem kaskadierten System verbunden ist.

12. Werkzeug (1) nach Anspruch 1, wobei die zwei Kämme (10, 20) in der ersten Kippkonfiguration durch die jeweiligen Verbindungsstange-Kurbel-Mechanismen (100, 200) bewegt werden, sodass sie gegenseitig in Gegenphase angeordnet sind.

## Revendications

1. Outil agricole mobile (1), tel qu'une moissonneuse, comprenant :
- un corps de machine comprenant un moteur (3) ;
- un premier peigne (10) et un second peigne (20) reliés au moteur (3) au moyen d'une transmission mécanique (2), qui comprend un premier mécanisme bielle-manivelle (100) configuré pour déplacer le premier peigne (10) et un second mécanisme bielle-manivelle (200) configuré pour déplacer le second peigne (20) ; chaque mécanisme bielle-manivelle (100, 200) comprenant un corps principal (101, 201) apte à tourner autour d'un axe de rotation (X, Y) respectif et une bielle (102, 202) ayant une première extrémité (102a, 202a) articulée sur le peigne (10, 20) respectif et une seconde extrémité (102b, 202b) articulée sur un corps principal (101, 201) respectif dans un maneton (103, 203) respectif ; en utilisation, lesdits corps principaux (101, 201) étant mutuellement concordants en rotation ;
**caractérisé en ce que** le moteur (3) est configuré pour fonctionner sélectivement dans une première direction d'entraînement et une seconde direction d'entraînement opposée à la première direction d'entraînement, et **en ce que**
le corps principal (101, 201) du premier et/ou du second mécanisme bielle-manivelle (100, 200) définit un chemin de glissement (104, 204) pour le maneton (103, 203) respectif, le chemin de glissement (103, 203) étant délimité par une première butée (104a, 204a) et une seconde butée (104b, 204b) et s'étendant autour de l'axe de rotation (X, Y) respectif afin que :
lorsque le moteur (3) fonctionne selon la première direction d'entraînement, le maneton (103, 203) bute contre la première butée (104a, 204a) de sorte que les deux peignes (10, 20) adoptent mutuellement une première configuration de basculement ; et
lorsque le moteur (3) fonctionne selon la seconde direction d'entraînement, le maneton (103, 203) bute contre la seconde butée (104b, 204b) de sorte que les deux peignes (10, 20) adoptent mutuellement une seconde configuration de basculement, qui est décalée par rapport à la première configuration de basculement.

2. Outil (1) selon la revendication 1, dans lequel, dans ladite première configuration de basculement, les deux peignes (10, 20) sont déplacés par les mécanismes bielle-manivelle (100, 200) respectifs afin d'être mutuellement en phase.

3. Outil (1) selon la revendication 1 ou 2, dans lequel chaque corps principal (101, 201) a la forme d'une roue dentée et dans lequel le chemin de glissement (104, 204) s'étend en arc de cercle autour de l'axe de rotation (X, Y) respectif ; les corps principaux (101, 201) des deux mécanismes bielle-manivelle (100, 200) ayant de préférence le même diamètre et lesdites deux bielles (102, 202) des deux mécanismes bielle-manivelle (100, 200) ayant la même longueur.

4. Outil (1) selon l'une quelconque des revendications précédentes, dans lequel un seul des mécanismes bielle-manivelle (100, 200) définit le chemin de glissement (104, 204) pour le maneton (103, 203) respectif et dans lequel le chemin de glissement (104, 204) s'étend angulairement sur un angle compris entre 10° et 210° autour de l'axe de rotation (X, Y) respectif, le chemin de glissement (104, 204) s'étendant de préférence angulairement sur 180° autour de l'axe de rotation (X, Y) respectif de sorte que dans la seconde configuration de basculement, les deux peignes (10, 20) se déplacent mutuellement en contre-phase.

5. Outil (1) selon l'une quelconque des revendications précédentes 1 à 3, dans lequel le premier mécanisme bielle-manivelle (100) définit un premier chemin de glissement (104) pour le maneton (103) respectif et dans lequel le second mécanisme bielle-manivelle (200) définit un second chemin de glissement (204) pour le maneton (203) respectif ;
lesdits premier et second chemins de glissement (104, 204) s'étendant angulairement autour de leurs axes de rotation (X, Y) respectifs et présentant une différence d'extension angulaire comprise entre 10° et 210°, les deux chemins de glissement (104, 204) présentant de préférence une différence d'extension angulaire de 180°, de sorte que dans la seconde configuration de basculement, les deux peignes (10, 20) se déplacent mutuellement en contre-phase.

6. Outil (1) selon l'une quelconque des revendications précédentes, dans lequel le chemin de glissement (104, 204) est défini par une rainure ou une fente (110, 210) obtenue sur le corps principal (101, 201) respectif, à laquelle la seconde extrémité (102b, 202b) de la bielle (102, 202) respective est couplée de manière coulissante.

7. Outil (1) selon l'une quelconque des revendications précédentes 1 à 5, dans lequel le premier et/ou le second mécanisme bielle-manivelle (100, 200) comprend un corps intermédiaire (120) articulé au corps principal (101) respectif afin de pouvoir tourner autour de l'axe de rotation (X) respectif ; la seconde extrémité (102b) de la bielle (102) respective étant intégralement articulée audit corps intermédiaire (120) dans une partie radialement périphérique de celui-ci ;
le corps principal (101) et le corps intermédiaire (120) respectif comportant des éléments de blocage mutuels (131, 132), tels que des protubérances et/ou des évidements, définissant ladite première butée (104a) et ladite seconde butée (104b), de sorte que le corps intermédiaire (120) puisse tourner par rapport au corps principal (101) respectif entre deux positions définissant respectivement les deux configurations de basculement (10, 20).

8. Outil (1) selon l'une quelconque des revendications précédentes, dans lequel les corps principaux (101, 201) des deux mécanismes bielle-manivelle (100, 200) sont coplanaires et placés côte à côte le long d'un axe longitudinal (Z) de l'outil (1) ; les axes de rotation (X, Y) des deux corps principaux (101, 201) étant parallèles.

9. Outil (1) selon l'une quelconque des revendications précédentes 1 à 7, dans lequel les corps principaux (101, 201) des deux mécanismes bielle-manivelle (100, 200) sont solidaires ou reliés en permanence afin d'être solidaires et sont rotatifs autour du même axe de rotation (X, Y) ; lesdits corps principaux (101, 201) définissant un double corps discoïdal auquel lesdites bielles (102, 202) sont reliées en rotation sur les côtés opposés du double corps discoïdal.

10. Outil (1) selon l'une quelconque des revendications précédentes, dans lequel ladite transmission mécanique (2) comprend un pignon (300) fonctionnellement relié et actif sur les deux corps principaux (101, 201) des deux mécanismes bielle-manivelle (100, 200).

11. Outil (1) selon l'une quelconque des revendications précédentes 1 à 9, dans lequel ladite transmission mécanique (20) comprend un pignon (300) relié fonctionnement à un seul des corps principaux (101, 201) des deux mécanismes bielle-manivelle (100, 200) tandis que l'autre corps principal (201, 101) est relié dans un système en cascade.

12. Outil (1) selon la revendication 1, dans lequel, dans ladite première configuration de basculement, les deux peignes (10, 20) sont déplacés par les mécanismes bielle-manivelle (100, 200) respectifs afin d'être mutuellement disposés en contre-phase.
